# EUROPÄISCHE PATENTSCHRIFT

(11) **EP 2 479 358 B1**
(45) Veröffentlichungstag und Bekanntmachung des Hinweises auf die Patenterteilung: **09.09.2015**
(21) Anmeldenummer: 12151864.1
(22) Anmeldetag: 20.01.2012
(51) Int. Cl.: E04F 15/08, E04F 15/18, F24D 3/16

(54) **Verfahren zum Herstellen eines Bodens in Fertigbauweise**
Method for producing a pre-fabricated floor
Procédé destiné à la fabrication d'un sol en préfabriqué

(30) Priorität: 20.01.2011 DE 102011000229
(43) Veröffentlichungstag der Anmeldung: 25.07.2012
(73) Patentinhaber: Schwörer Haus KG, 72531 Hohenstein (DE)
(72) Erfinder: Schwörer, Johannes, 72531 Hohenstein-Oberstetten (DE)
(74) Vertreter: Schaumburg & Partner Patentanwälte (GbR)

(56) Entgegenhaltungen:
- EP-A2- 0 162 354
- AT-B- 410 109
- DE-A1- 3 815 624

## Beschreibung

Die Erfindung betrifft ein Verfahren zum Herstellen eines Gebäudes in Fertigbauweise gemäß Oberbegriff des Anspruchs 1, bei dem mindestens ein Boden des Gebäudes gefertigt wird, wobei dieser Boden eine tragende Unterkonstruktion umfasst.

Bei bekannten Verfahren zum Herstellen eines Gebäudes in Fertigbauoder Massivbauweise werden die Böden aus tragenden Stahlbetonplatten, Holzbalkendecken und/oder Stahlrippendecken gefertigt. Auf diese tragenden Konstruktionen wird ein Estrich auf der Baustelle aufgebracht, auf dem wiederum ein Bodenbelag, beispielsweise Fliesen, Teppichboden, Parkett und/oder Laminat, aufgebracht wird. Das Aufbringen von Estrich auf die tragenden Stahlbetonplatten auf der Baustelle ist aufwändig und zeitintensiv. Ferner ist dies mit hohen Kosten verbunden.

Aus dem Dokument AT 410109 B ist ein Verfahren zum Herstellen eines Bodenfundamentes in Fertigbauweise bekannt, bei dem werksseitig vorgefertigte Bodenfertigteilplattenfundamentelemente mit oben offenen Köchern über Schrauben miteinander verbunden werden.

Aus dem Dokument EP 0 162 354 A2 sind transportable Bauelemente mit Isolierplatten bekannt.

Aus dem Dokument DE 38 15 624 A1 ist es bekannt, in den Fugen zwischen Belagplatten ein Fugenband anzuordnen und den Rest der Fugen mit einer dauerelastischen Fugenfüllmasse auszufüllen.

Es ist Aufgabe der Erfindung, ein Verfahren zum Herstellen eines Gebäudes in Fertigbauweise anzugeben, bei dem die Böden auf einfache Weise mit geringem Aufwand gefertigt werden können.

Diese Aufgabe wird durch ein Verfahren mit den Merkmalen des Anspruchs 1 gelöst. Vorteilhafte Weiterbildungen der Erfindung sind in den abhängigen Ansprüchen angegeben.

Erfindungsgemäß wird mindestens ein Bodenelement werksseitig vorgefertigt, wobei die Schalung, in die der Beton für das Bodenelement gegossen wird, einen Boden umfasst, der eine Oberfläche hat, die im Wesentlichen glatt ist. Das Bodenelement wird derart auf der Unterkonstruktion aufgebracht, dass die untere glatte Seite des Bodenelements, die bei der Vorfertigung das Bodenelement der Schalung kontaktierte, der Unterkonstruktion abgewandt angeordnet ist, und dass die der glatten Seite entgegengesetzte obere Seite zumindest teilweise auf der Unterkonstruktion aufliegt. Hierdurch wird erreicht, dass auf das Aufbringen eines Estrichs auf der tragenden Unterkonstruktion auf der Baustelle verzichtet werden kann und stattdessen die Bodenelemente verwendet werden können. Durch das Wenden des Bodenelements, d.h. durch das Anordnen der unteren glatten Seite, die bei der Fertigung den Boden der Schalung kontaktierte, als obere Seite des Bodens, wird erreicht, dass der Bodenbelag direkt auf die oben liegende untere glatte Seite des Bodenelements aufgebracht werden kann. Somit wird die Fertigung des Bodens weiter vereinfacht und standardisiert, so dass alle Teile des Bodens vorgefertigt werden können und auf der Baustelle direkt keine Schicht des Bodens aufgebracht werden muss.

Das Bodenelement liegt insbesondere mit ihrer oberen Seite flächig auf der Unterkonstruktion auf, so dass diese von der tragenden Unterkonstruktion gestützt wird und ein Brechen des Bodenelements bei starken Belastungen vermieden wird. Bei einer alternativen Ausführungsform der Erfindung kann das Bodenelement auch nicht flächig, sondern nur punktmä-ßig auf der Unterkonstruktion aufliegen.

Bei dem Vorfertigen des Bodenelements wird insbesondere eine Bewehrung vorgesehen, so dass die Festigkeit des Bodenelements erhöht wird. Insbesondere wird hierdurch vermieden, dass das Bodenelement während des Transportes zerbrechen kann. Ferner wird hierdurch erreicht, dass auch Bodenelemente mit relativ großen Abmessungen vorgefertigt werden können, so dass auf der Baustelle nur eine geringe Anzahl von Bodenelementen verlegt werden muss. Zur Bewehrung werden insbesondere Stahlmatten und/oder Stahlstäbe mit in das Bodenelement eingegossen. Alternativ können die Stahlmatte und/oder die Stahlstäbe auch vor dem Trocknen des Betons in diesen hineingedrückt werden.

Ferner ist es vorteilhaft, wenn bei der Vorfertigung des Bodenelements mindestens ein Rohr und/oder mindestens eine Rohrleitung in dem Bodenelement vorgesehen wird. Dieses Rohr wird insbesondere vor dem Eingießen oder während des Eingießens des Betons in der Schalung angeordnet und in den Beton miteingegossen. Das Rohr dient insbesondere als Rohr für eine Fußbodenheizung, durch das das erwärmte Wasser der Fußbodenheizung hindurchgeführt wird. Das Rohr ist insbesondere mäanderförmig oder schneckenförmig ausgebildet, so dass nur ein Zu- und ein Ablauf vorgesehen sein müssen. Alternativ können auch mehrere Rohre vorgesehen sein.

Bei einer besonders bevorzugten Ausführungsform der Erfindung wird nach dem Einfüllen des Betons in die Schalung und vor dem Aushärten des Betons mindestens ein Dämmelement gegen den noch feuchten Beton gedrückt, so dass das Dämmelement durch den Beton nach dem Aushärten des Betons an der Betonschicht anhaftet. Als Dämmelement werden insbesondere Mineralfasermatten verwendet. Somit umfasst das vorgefertigte Bodenelement bereits eine Dämmung, so dass diese nicht separat auf die Unterkonstruktion aufgebracht werden muss, sondern dies in einem Arbeitsschritt erfolgen kann. Bei einer alternativen Ausführungsform der Erfindung können die Dämmelemente auch auf den ausgehärteten Beton aufgeklebt werden. Das Dämmelement bzw. die Dämmelemente bilden insbesondere die obere Seite des Bodenelements, die nach dem Aufbringen auf der Unterkonstruktion diese kontaktiert.

Ferner kann vor dem Einfüllen des Betons in die Schalung auf den Boden der Schalung mindestens ein Dämmelement gelegt werden, auf das anschließend der Beton gegossen wird. Hierdurch wird erreicht, dass auf der unteren Seite des Bodenelements eine Dämmung vorgesehen ist. Das Dämmelement umfasst insbesondere wiederum mindestens eine Mineralfasermatte. Bei einer besonders bevorzugten Ausführungsform der Erfindung wird sowohl an der unteren als auch an der oberen Seite des Bodenelements jeweils mindestens ein Dämmelement vorgesehen. In diesem Fall, wie auch beim Vorsehen eines Dämmelements an der unteren Seite wird der Bodenbelag anschließend auf dieses Dämmelement aufgebracht.

Bei einer bevorzugten Ausführungsform der Erfindung wird ein Bodenelement mit einer Länge zwischen 0,5 m und 8 m, insbesondere zwischen 3 m und 7 m und/oder einer Breite zwischen 0,5 m und 4 m, insbesondere zwischen 1,5 m und 3,0 m, verwendet. Durch das Verwenden solcher großflächiger Bodenelemente wird erreicht, dass nur eine geringe Anzahl von Bodenelementen verwendet werden muss und somit der Montageaufwand auf der Baustelle gering ist.

Die durch den eingefüllten Beton gebildete Betonschicht des Bodenelements hat vorzugsweise eine Stärke zwischen 30 mm und 70 mm, insbesondere eine Stärke von 45 mm. Somit ist die Stärke des Bodenelements geringer als ein üblicher Estrich, der auf der Unterkonstruktion aufgebracht würde, so dass durch das Ersetzen des Estrichs durch die Bodenelemente ein schlankerer Aufbau des Bodens erreicht wird.

Bei einer bevorzugten Ausführungsform der Erfindung wird das Bodenelement als Ersatz für einen Estrich verwendet. Nach dem Aufbringen des Bodenelements auf der Unterkonstruktion wird auf der unteren glatten Seite des Bodenelements, die nun nach oben gerichtet ist, direkt ein Bodenbelag aufgebracht. Somit muss kein Estrich vorgesehen werden, so dass eine einfache kostengünstige Fertigung erreicht wird. Als Bodenbelag kann insbesondere ein Teppichboden, Fliesen, Laminat und/oder Parkett vorgesehen sein. Das Bodenelement hat insbesondere eine voreingestellte Festigkeit.

Bei einem besonders bevorzugten Verfahren werden mehrere Bodenelemente vorgefertigt und auf der Unterkonstruktion aufgebracht. Hierbei werden insbesondere Bodenelemente unterschiedlicher Abmessungen, insbesondere unterschiedlicher Breite und/oder unterschiedlicher Länge, verwendet. Die Abmessungen sind insbesondere so gewählt, dass möglichst wenige Bodenelemente verlegt werden müssen, so dass der Montageaufwand minimiert wird. Die Abmessung der Bodenelemente ist insbesondere an die Größen der jeweiligen Zimmer bzw. Räume angepasst, dessen Boden durch die Bodenelemente und die Unterkonstruktion gebildet wird.

Die Bodenelemente weist an mindestens einer der Unterkonstruktion abgewandten Kante, wenn das Bodenelement auf der Unterkonstruktion aufgebracht ist, eine Aussparung auf. Durch das zumindest teilweise Ausfüllen der durch diese Aussparung gebildeten Fuge zwischen zwei benachbarten Bodenelementen mit einem Verbindungsmittel wird erreicht, dass die Bodenelemente miteinander verbunden sind, und eine ebene Fläche zum Verlegen des Bodenbelages gebildet wird. Als Verbindungsmittel wird insbesondere Epoxyd-Harz und/oder ein Klebstoff auf Epoxyd-Harz-Basis verwendet, so dass eine sehr stabile Verbindung zwischen dem Boden und den Bodenelementen gegeben ist und eine Veränderung der relativen Lage der Bodenelemente zueinander verhindert oder zumindest verringert wird. Alternativ kann als Verbindungsmittel auch ein anderer geeigneter Klebstoff verwendet werden.

Die Bodenelemente weisen insbesondere an der der Unterkonstruktion abgewandten Seite jeweils Aussparungen auf, wobei diese Aussparungen insbesondere derart ausgebildet sind, dass die zwischen zwei benachbarten Bodenelementen sich ergebende Fuge rechteckig, kreisförmig, oval, v-förmig oder trogförmig ist. Die Fuge wird vorzugsweise vollständig, mit dem Verbindungsmittel befüllt, so dass ein besonders sicherer Halt zwischen den Bodenelementen erreicht wird.

Ferner ist es vorteilhaft, wenn vor dem Ausfüllen der Fugen die Bodenelemente mit Hilfe von Vorspannelementen verspannt werden, so dass eine Relativbewegung der Bodenelemente zueinander während des Ausfüllens der Fugen vermieden wird und/oder bauübliche Unebenheiten ausgeglichen werden. Nach dem Verfugen und Aushärten der Fugen werden diese Vorspannelemente insbesondere wieder entfernt.

Bei einer alternativen Ausführungsform der Erfindung kann zwischen der Unterkonstruktion und den Bodenelementen auch noch eine Trittschallschutzdämmung vorgesehen sein.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1: eine schematische Darstellung eines Gebäudes;
- Figur 2: eine schematische Schnittdarstellung eines Bodens des Gebäudes nach Figur 1;
- Figur 3: eine schematische Darstellung eines Bodenelements gemäß einer ersten Ausführungsform der Erfindung;
- Figur 4: eine schematische Darstellung eines Bodenelements gemäß einer zweiten Ausführungsform der Erfindung;
- Figur 5: eine schematische Darstellung eines Bodenelements gemäß einer dritten Ausführungsform der Erfindung;
- Figur 6: eine schematische Darstellung eines Bodenelements gemäß einer vierten Ausführungsform der Erfindung;
- Figur 7: eine schematische Darstellung eines Bodenelements gemäß einer fünften Ausführungsform der Erfindung;
- Figur 8: eine schematische Darstellung eines Verlegeplans von Bodenelementen für den Boden eines Gebäudes;
- Figur 9: eine schematische Darstellung zweier benachbarter Bodenelemente gemäß einer sechsten Ausführungsform der Erfindung;
- Figur 10: eine schematische Darstellung zweier benachbarter Bodenelemente gemäß einer siebten Ausführungsform der Erfindung; und
- Figur 11: eine schematische Darstellung zweier benachbarter Bodenelemente gemäß einer achten Ausführungsform der Erfindung.

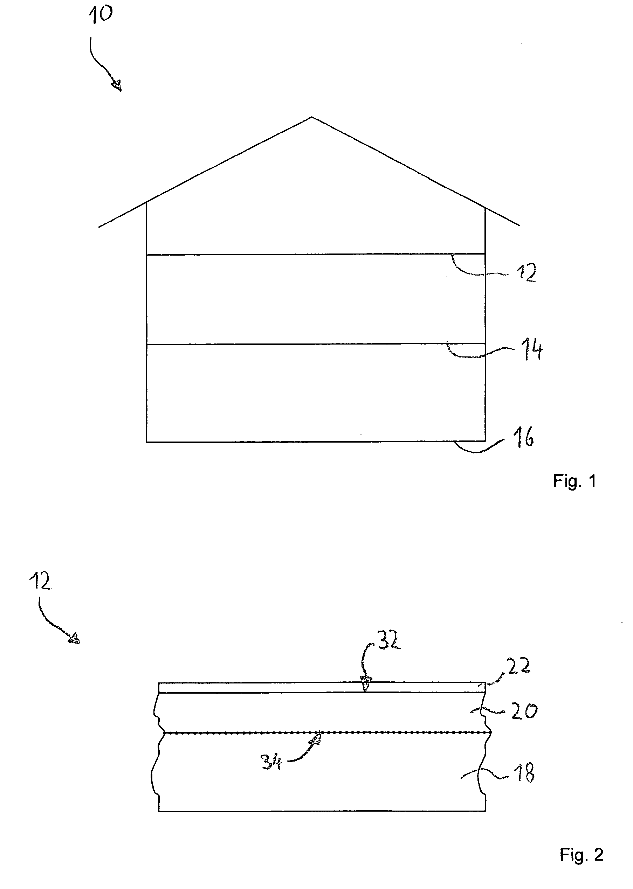

In Figur 1 ist eine schematische Darstellung eines in Fertigbauweise errichteten Gebäudes 10, beispielsweise eines Wohnhauses, gezeigt. Das Gebäude 10 umfasst drei Böden 12, 14, 16. Als Boden werden sowohl der Boden 16 des Gebäudes, auf dem das Gebäude 10 errichtet ist, als auch die einzelnen Böden 12, 14 der Geschosse innerhalb des Gebäudes 10 verstanden.

In Figur 2 ist eine schematische Schnittdarstellung des Bodens 12 zur Verdeutlichung seines Aufbaus gezeigt. Die anderen beiden Böden 14, 16 sind gleichartig aufgebaut, so dass die folgenden Ausführungen für die anderen beiden Böden 14, 16 entsprechend gelten.

Der Boden 12 umfasst eine tragende Unterkonstruktion 18, die im Wesentlichen das Gewicht von auf dem Boden 12 aufgestellten Wänden, Gegenständen und/oder Personen trägt. Die tragende Unterkonstruktion 18 umfasst insbesondere mehrere Stahlbetonplatten, Holzbalkendeckenelemente und/oder Stahlrippendeckenelemente, die werkseitig vorgefertigt sind und an dem Ort, an dem das Gebäude 10 aufgebaut wird, verbaut werden.

Auf der tragenden Unterkonstruktion 18 ist ein Bodenelement 20 aufgebracht, auf dem wiederum ein Bodenbelag 22 aufgetragen ist. Bei dem Bodenbelag 22 handelt es sich insbesondere um einen Teppichboden, Fliesen, Laminat und/oder Parkett.

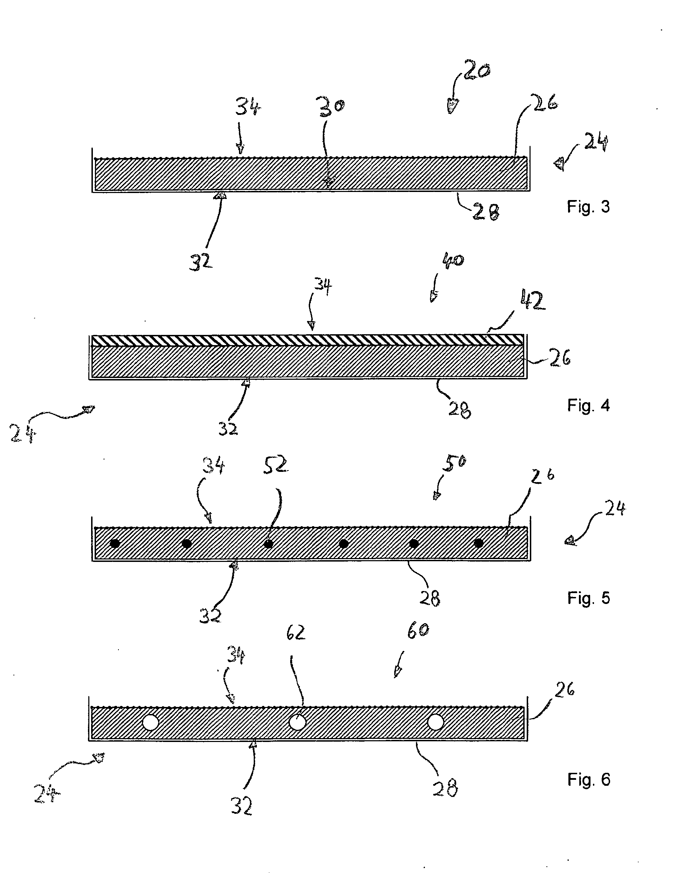

Das Bodenelement 20 ersetzt einen Estrich, der bei bekannten Verfahren auf der tragenden Unterkonstruktionen 18 aufgebracht wird, um dann auf diesen Estrich den Bodenbelag 22 zulegen. Das Bodenelement 20 ist, wie im Zusammenhang mit den folgenden Figuren 3 bis 6 noch näher beschrieben wird, werksseitig vorgefertigt und wird als Fertigbauteil zu dem Ort, an dem das Gebäude 10 errichtet wird, transportiert. Somit muss auf der Baustelle kein Estrich verlegt werden, so dass durch die Bodenelemente 20 eine einfache, zeitsparende Montage des Bodens 12 möglich ist.

In Figur 3 ist eine schematische Darstellung des Bodenelements 20 bei der werksseitigen Vorfertigung gezeigt. Bei dieser Vorfertigung wird der Beton zum Fertigen einer Betonschicht 26 des Bodenelements 20 in eine Schalung 24 gegossen. Die Schalung 24 umfasst ein Boden 28, dessen innere Oberfläche 30, auf die der Beton aufgebracht wird, im Wesentlichen glatt ist.

Durch die glatte Oberfläche 30 des Bodens 28 wird erreicht, dass auch die untere Seite des Bodenelements 20 im Wesentlichen glatt ist. Die obere Seite 34 des Bodenelements 20 ist, verglichen mit der unteren Seite 32, wie durch die Punktlinie in Figur 3 angedeutet, relativ uneben. Unter einer im Wesentlichen glatten Oberfläche wird insbesondere verstanden, dass diese so glatt ist, dass auf ihr direkt ein Bodenbelag 22 aufgebracht werden kann, ohne dass das Auftragen eines Estrichs notwendig ist.

Nachdem der Beton der Betonschicht 26 ausgehärtet ist, wird das entstandene Bodenelement 20 aus der Schalung 24 entnommen, gewendet und zu dem Ort des Gebäudes 10 transportiert. Dort wird das Bodenelement 20 derart auf der Unterkonstruktion 18 aufgebracht, dass, wie Figur 2 gezeigt, die obere Seite 34 auf der tragenden Unterkonstruktion 18 aufliegt und die glatte untere Seite 32 von der Unterkonstruktion 18 abgewandt ist, so dass auf dieser der Bodenbelag 22 aufgebracht werden kann. Das Bodenelement 20 ist somit nach dem Aufbringen auf der Unterkonstruktion 18 verglichen mit der Vorfertigung um 180° gewendet, so dass die vorher untere Seite 32 nun nach oben gewandt ist und die vorher obere Seite 34 nun untenliegend ist.

In Figur 4 ist eine schematische Darstellung eines Bodenelements 40 gemäß einer zweiten Ausführungsform der Erfindung während der werksseitigen Vorfertigung gezeigt. Hierbei wird, bevor der Beton der Betonschicht 26 ausgetrocknet ist, ein Dämmelement 42 gegen den noch feuchten Beton gedrückt, so dass es ohne die Verwendung eines Klebstoffes oder ähnlichem an der Betonschicht 26 anhaftet und somit eine Dämmschicht des Bodenelements 40 bildet. Als Dämmelemente 42 werden insbesondere Mineralfasermatten oder ähnliches verwendet.

In Figur 5 ist eine schematische Darstellung eines Bodenelements 50 gemäß einer dritten Ausführungsform der Erfindung während der werkseitigen Fertigung gezeigt. In der Betonschicht 26 sind mehrere Stahlstangen 52 als Bewehrung angeordnet, so dass die Festigkeit des Bodenelements 50 erhöht wird. Alternativ oder zusätzlich kann das Bodenelement 50 auch durch Gitterträger und/oder Stahlmatten bewehrt werden.

In Figur 6 ist eine schematische Darstellung eines Bodenelements 60 gemäß einer vierten Ausführungsform der Erfindung bei der Vorfertigung gezeigt. Das Bodenelement 60 umfasst ein mäanderförmiges Heizungsrohr 62, das Teil einer Fußbodenheizung ist und in die Betonschicht 26 mit eingegossen ist. Bei einer alternativen Ausführungsform kann das Heizungsrohr 62 auch schneckenförmig sein. Ebenso ist alternativ möglich, dass mehrere Heizungsrohre 62 vorgesehen sind. Diese Heizungsrohre 62 können miteinander verbunden sein oder unabhängig voneinander mit Warmwasser durchleitet werden.

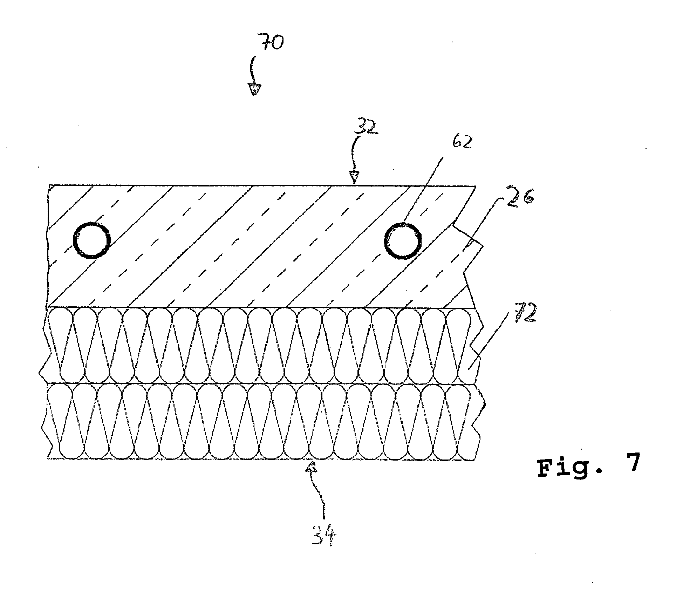

In Figur 7 ist eine schematische Darstellung eines Bodenelements 70 gemäß einer fünften Ausführungsform der Erfindung gezeigt. Das Bodenelement 70 ist bereits gewendet, d.h. bereits in derjenigen Position angeordnet, in der sie auf der Unterkonstruktion 18 aufgebracht wird. Bei dieser siebten Ausführungsform der Erfindung ist zum einen ein Dämmelement 72 vorgesehen und zum anderen sind Heizungsrohre 62 in der Betonschicht 26 angeordnet.

Bei einer weiteren alternativen Ausführungsform kann zusätzlich zu dem Dämmelement 72 und den Heizungsrohren 62 auch eine Bewehrung vorgesehen sein. Alternativ können auch eine Dämmschicht und eine Bewehrung, aber keine Heizungsrohre 62 vorgesehen sein.

Des Weiteren kann das Dämmelement 42, 72 anstatt an der oberen Seite 34 auch an der unteren Seite 32 vorgesehen sein. Ferner können alternativ auch sowohl an der oberen Seite 34 als auch auf der unteren Seite 32 jeweils Dämmelemente 42, 72 angeordnet sein, so dass eine beidseitige Dämmung erreicht wird. Weitere Ausführungsformen ergeben sich durch die Kombination der einzelnen Merkmale der Ausführungsformen gemäß den Figuren 3 bis 7.

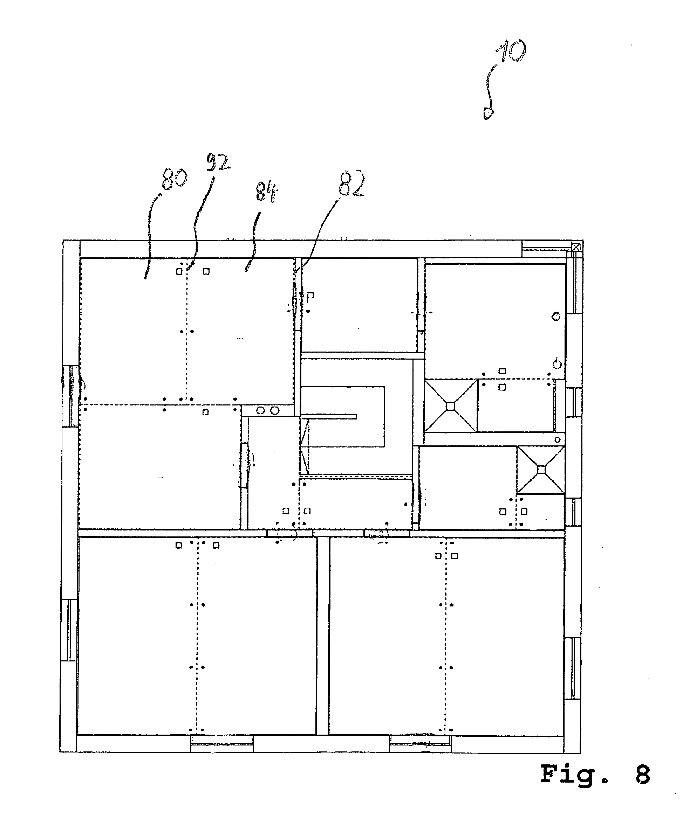

In Figur 8 ist eine schematische Darstellung eines Verlegeplans von Bodenelementen 80, 84 des Bodens 12 des Gebäudes 10 dargestellt. Die Bodenelemente 80, 84 können entsprechend den zuvor beschriebenen Ausführungsformen ausgebildet sein.

Es wird eine Vielzahl unterschiedlich großer Bodenelemente 80, 84 verwendet, so dass die durch die Trennwände 82 vorgegebenen Zimmergrö-βen mit möglichst wenigen Bodenelementen 80, 84 jeweils bedeckt werden können. Die Bodenelemente 80, 84 haben insbesondere eine Länge zwischen 0,5 m und 8 m und/oder eine Breite zwischen 0,5 m und 4 m, so dass nur eine möglichst geringe Anzahl von Bodenelementen 80, 84 zum Belegen des gesamten Bodens 12 notwendig ist. Die Bodenelemente 80, 84 haben insbesondere eine Stärke von in etwa 45 mm, so dass ein schlanker und trotzdem stabiler Aufbau des Bodens 12 erreicht wird.

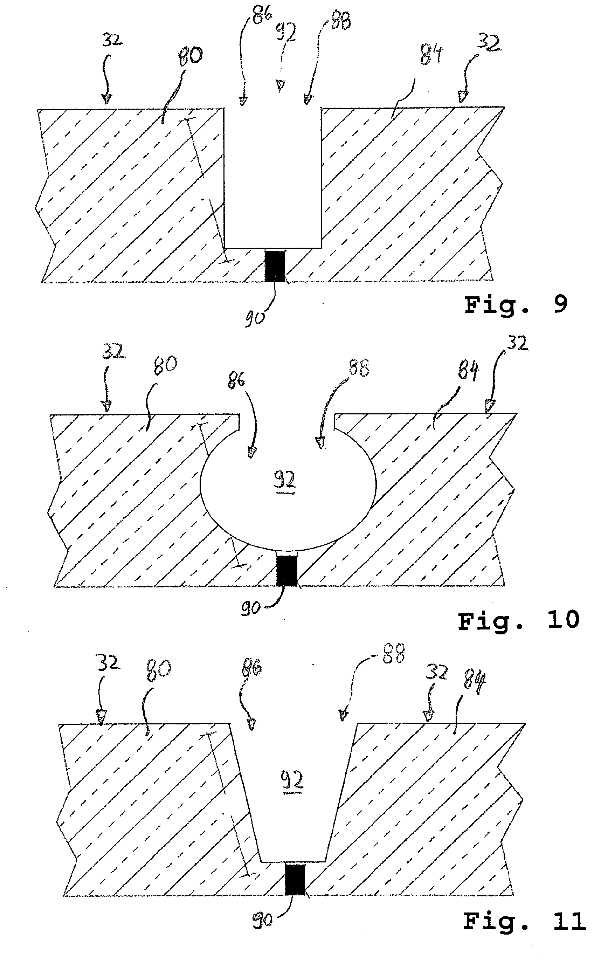

Zwischen zwei nach der Verlegung benachbarten Bodenelementen 80, 84 ist jeweils eine Fuge ausgebildet, in der, wie in den Figuren 9 bis 11 gezeigt, ein Band 90 angeordnet ist, so dass ein Teil der Fuge hierdurch verfüllt ist. Ferner weisen die benachbarten Bodenelemente 80, 84 jeweils eine Aussparung 86, 88 auf, die derart ausgebildet ist, dass sich bei der sechsten Ausführungsform nach Figur 9 eine Fuge 92 mit einem rechteckigen Querschnitt ergibt. Die Fuge 92 wird zumindest teilweise, vorzugsweise vollständig, mit einem Verbindungsmittel gefüllt, so dass die Bodenelemente 80, 84 miteinander verbunden sind und ihre relative Lage zueinander fixiert ist. Als Verbindungsmittel wird beispielsweise ein Klebstoff auf Epoxyd-Harz-Basis und/oder Beton verwendet.

Bei der siebten Ausführungsform nach Figur 10 sind die Aussparungen 86, 88 derart ausgebildet, dass die Fuge 92 einen ovalen Querschnitt hat.

In Figur 11 sind zwei benachbarte Bodenelemente 80, 84 gezeigt, wobei deren Kanten derartige Aussparungen 86, 88 aufweisen, dass der Querschnitt der Fuge 92 trogförmig ausgebildet ist.

Bei alternativen Ausführungsformen der Erfindung können die Fugen 92 auch einen v-förmigen oder einen kreisförmigen Querschnitt haben. Ebenso sind alternativ weitere Querschnittsformen der Fugen 92 möglich.

### Bezugszeichenliste

| | |
|---|---|
| 10 | Gebäude |
| 12, 14, 16 | Boden |
| 18 | Unterkonstruktion |
| 20, 40, 50, 60, 70, | |
| 80, 84 | Bodenelement |
| 22 | Bodenbelag |
| 24 | Schalung |
| 26 | Betonschicht |
| 28 | Boden |
| 30 | Oberfläche |
| 32 | untere Seite |
| 34 | obere Seite |
| 42, 72 | Dämmelement |
| 52 | Bewehrung |
| 62 | Rohr |
| 82 | Trennwand |
| 86, 88 | Aussparung |
| 90 | Band |
| 92 | Fuge |

## Patentansprüche

1. Verfahren zum Herstellen eines Gebäudes in Fertigbauweise,
bei dem eine Schalung (24) zum Vorfertigen von Bodenelementen (20, 40, 50, 60, 70, 80, 84) bereitgestellt wird, wobei eine Oberfläche (30) eines Bodens (28) der Schalung (24), auf die der Beton des Bodenelements (20, 40, 50, 60, 70, 80, 84) beim Vorfertigen des Bodenelements (20, 40, 50, 60, 70, 80, 84) gegossen wird, im Wesentlichen glatt ist,
nach dem Aushärten des Betons das Bodenelement (20, 40, 50, 60, 70, 80, 84) aus der Schalung (24) entnommen wird,
eine tragenden Unterkonstruktion (18) eines Bodens (12, 14, 16) des Gebäudes (10) errichtet wird, und
bei dem das Bodenelement (20, 40, 50, 60, 70, 80, 84) derart auf der Unterkonstruktion (18) aufgebracht wird, dass die untere glatte Seite (32) des Bodenelements (20, 40, 50, 60, 70, 80, 84), die bei der Vorfertigung den Boden (28) der Schalung (32) kontaktierte, der Unterkonstruktion (18) abgewandt angeordnet ist, und dass die bei der Vorfertigung der unteren glatten Seite (32) gegenüberliegende obere Seite (34) des Bodenelements (20, 40, 50, 60, 70, 80, 84), zumindest teilweise auf der Unterkonstruktion (18) aufliegt,
**dadurch gekennzeichnet, dass** eine Unterkonstruktion (18) verwendet wird, die eine tragende Stahlbetonplatte, Holzbalkendeckenelemente und/oder Stahlrippendeckenelemente umfasst.

2. Verfahren nach Anspruch 1, **dadurch gekennzeichnet, dass** eine Bewehrung (52), insbesondere eine Stahlmatte und/oder mindestens ein Stahlstab, bei der Vorfertigung des Bodenelements (20, 40, 50, 60, 70, 80, 84) in dem Bodenelement (20, 40, 50, 60, 70, 80, 84) vorgesehen wird.

3. Verfahren nach einem der vorhergehenden Ansprüche, **dadurch gekennzeichnet, dass** bei der Vorfertigung mindestens ein Rohr (62), insbesondere ein mäanderförmiges Rohr (62) oder ein schneckenförmiges Rohr (62), in dem Bodenelement (20, 40, 50, 60, 70, 80, 84) vorgesehen wird.

4. Verfahren nach einem der vorhergehenden Ansprüche, **dadurch gekennzeichnet, dass** nach dem Einfüllen des Betons in die Schalung (24) und vor dem Aushärten des Betons ein Dämmelement (42, 72), insbesondere mindestens eine Mineralfasermatte, gegen den noch feuchten Beton gedrückt wird.

5. Verfahren nach einem der vorhergehenden Ansprüche, **dadurch gekennzeichnet, dass** vor dem Einfüllen des Betons in die Schalung (24) auf den Boden (28) der Schalung (24) mindestens ein Dämmelement, insbesondere mindestens eine Mineralfasermatte, gelegt wird.

6. Verfahren nach einem der vorhergehenden Ansprüche, **dadurch gekennzeichnet, dass** ein Bodenelement (20, 40, 50, 60, 70, 80, 84) mit einer Länge zwischen 0,5 m und 8 m, insbesondere zwischen 3 m und 7 m, und/oder einer Breite zwischen 0,5 m und 4 m, insbesondere zwischen 1,5 m und 3 m, verwendet wird.

7. Verfahren nach einem der vorhergehenden Ansprüche, **dadurch gekennzeichnet, dass** die durch den eingefüllten Beton gebildete Betonschicht (26) des Bodenelements (20, 40, 50, 60, 70, 80, 84) mit einer Stärke zwischen 30 mm und 60 mm, insbesondere mit einer Stärke von 45 mm, gefertigt wird.

8. Verfahren nach einem der vorhergehenden Ansprüche, **dadurch gekennzeichnet, dass** nach dem Aufbringen des Bodenelements (20, 40, 50, 60, 70, 80, 84) auf der Unterkonstruktion (18) auf der unteren glatten Seite (32) des Bodenelements (20, 40, 50, 60, 70, 80, 84) direkt ein Bodenbelag (22), insbesondere ein Teppichboden, Fließen, Laminat und/oder Parkett, aufgebracht wird.

9. Verfahren nach einem der vorhergehenden Ansprüche, **dadurch gekennzeichnet, dass** das Bodenelement (20, 40, 50, 60, 70, 80, 84) anstelle eines Estrichs verwendet wird.

10. Verfahren nach einem der vorhergehenden Ansprüche, **dadurch gekennzeichnet, dass** das Bodenelement (20, 40, 50, 60, 70, 80, 84) eine voreingestellte Festigkeit hat.

11. Verfahren nach einem der vorhergehenden Ansprüche, **dadurch gekennzeichnet, dass** mehrere Bodenelemente (20, 40, 50, 60, 70, 80, 84), insbesondere mehrere Bodenelements (20, 40, 50, 60, 70, 80, 84) mit unterschiedlichen Abmessungen, vorgefertigt und auf der Unterkonstruktion (18) aufgebracht werden.

12. Verfahren nach Anspruch 11, **dadurch gekennzeichnet, dass** zwischen zwei benachbarten Bodenelementen (20, 40, 50, 60, 70, 80, 84) eine Kompriband (90) angeordnet wird.

13. Verfahren nach Anspruch 11 oder 12, **dadurch gekennzeichnet, dass** das Bodenelement (20, 40, 50, 60, 70, 80, 84) an mindestens einer der Unterkonstruktion (18) abgewandten Kante eine Aussparung (86, 88) aufweist, und dass zwei benachbarte Bodenelemente (20, 40, 50, 60, 70, 80, 84) durch das zumindest teilweise Ausfüllen der durch die Aussparung (86, 88) gebildeten Fuge (92) mit einem Verbindungsmittel, insbesondere mit einem Klebstoff auf EpoxydHarz-Basis, miteinander verbunden werden.

14. Verfahren nach Anspruch 13, **dadurch gekennzeichnet, dass** zwei benachbarte Bodenelemente (20, 40, 50, 60, 70, 80, 84) an der der Unterkonstruktion (18) abgewandten und einander zugewandten Kante jeweils eine Aussparung (86, 88) aufweisen, und dass die durch die Aussparungen (86, 88) gebildete Fuge (92) einen rechteckigen, einen kreisförmigen, einen ovalen, einen V-förmigen oder einen trogförmigen Querschnitt hat.

15. Verfahren nach einem der vorhergehenden Ansprüche, **dadurch gekennzeichnet, dass** eine Unterkonstruktion (18) verwendet wird, die eine tragende Stahlbetonplatte und eine Trittschallschutzdämmung umfasst.

## Claims

1. Method for the production of a building using prefabrication,
in which a casing (24) is provided for the prefabrication of floor elements (20, 40 , 50, 60, 70, 80, 84), wherein a surface (30) of a floor (28) of the casing (24), onto which surface the concrete of the floor element (20, 40, 50, 60, 70, 84) is poured during the prefabrication of the floor-element (20, 40, 50, 60, 70, 80, 84), is generally flat,
after the hardening of the concrete the floor element (20, 40, 50, 60, 70, 80, 84) is removed from the casing (24),
a supporting substructure (18) of a floor (12, 14, 16) of the building (10) is erected, and
in which the floor element (20, 40, 50, 60, 70, 80, 84) is put onto the substructure (18) in such a manner that the flat lower surface (32) of the floor element (20, 40, 50, 60, 70, 80, 84) which was in contact with the floor (28) of the casing (32) during prefabrication, is arranged so that it faces away from the substructure (18) and that the upper surface (34) of the floor element (20, 40, 50, 60, 70, 80, 84) which was opposite to the lower flat surface (32) during prefabrication, is resting at least partially on the substructure (18),
**characterized in that** a substructure (18) is used which comprises a supporting reinforced concrete slab, wooden beam ceiling elements and/or steel rip ceiling elements.

2. The method according to claim 1, **characterized in that** a reinforcement (52), in particular a steel mat and/or at least one steel rod, is provided inside the floor element (20, 40, 50, 60, 70, 80, 84) during the prefabrication of the floor element (20, 40, 50, 60, 70, 80, 84).

3. The method according to one of the preceding claims, **characterized in that** during the prefabrication at least one pipe (62), in particular a meandershaped pipe (62) or a spiral-shaped pipe (62), is provided inside the floor element (20, 40, 50, 60, 70, 80, 84).

4. The method according to one of the preceding claims, **characterized in that** after the concrete is filled into the casing (24) and before the concrete hardens, an insulating element (42, 72), in particular at least one mineral fiber mat, is pressed against the still wet floor.

5. The method according to one of the preceding claims, **characterized in that** before the concrete Is filled into the casing (24) at least one insulating element, in particular at least one mineral fiber mat, is put onto the floor (28) of the casing (24).

6. The method according to one of the preceding claims, **characterized in that** a floor element (20, 40, 50, 60, 70, 80, 84) with a length of between 0.5 m and 8 m, in particular between 3 m and 7 m, and/or a width between 0.5 m and 4 m, in particular between 1.5 m and 3 m, is used.

7. The method according to one of the preceding claims, **characterized in that** the concrete layer (26) of the floor element (20, 40, 50, 60, 70, 80, 84) formed of the poured concrete is produced with a thickness of between 30 mm and 60 mm, and in particular with a thickness of 45 mm.

8. The method according to one of the preceding claims, **characterized in that** after putting the floor element (20, 40, 50, 60, 70, 80, 84) onto the substructure (18) a floor covering (22), in particular a carpet floor, tiles, laminate, and/or parquet flooring, is put directly onto the lower flat surface (32) of the floor element (20, 40, 50, 60, 70, 80, 84).

9. The method according to one of the preceding claims, **characterized in that** the floor element (20, 40, 50, 60, 70, 80, 84) is used instead of a screed.

10. The method according to one of the preceding claims, **characterized in that** the floor element (20, 40, 50, 60, 70, 80, 84) has a preselected strength.

11. The method according to one of the preceding claims, **characterized in that** a plurality of floor elements (20, 40, 50, 60, 70, 80, 84), in particular a plurality of floor elements (20, 40, 50, 60, 70, 80, 84) having different dimensions, is prefabricated and put onto the sub-structure (18).

12. The method according to claim 11, **characterized in that** a pre-compressed tape (90) is provided between two adjacent floor elements (20, 40, 50, 60, 70, 80, 84).

13. The method according to claim 11 or 12, **characterized in that** the floor element (20, 40, 50, 60, 70, 80, 84) has a recess (86, 88) on at least one edge facing away from the substructure (18) and that two adjacent floor elements (20, 40, 50, 60, 70, 80, 84) are joined to each other by at least partially filing the joint (92) formed by the recess (86, 88) with a connecting means, in particular with an epoxy-resin based adhesive.

14. The method according to claim 13, **characterized in that** two adjacent floor elements (20, 40, 50, 60, 70, 80, 84) each have a recess (86, 88) on their edges facing away from the substructure (18) and facing towards each other, and **in that** the joint (92) formed by the recesses (86, 88) has a rectangular, a circular, an oval-shaped, a V-shaped, or a trough-shaped cross-section.

15. The method according to one of the preceding claims, **characterized in that** a substructure (18) is used which includes a supporting reinforced concrete slab and a footfall sound insulation.

## Revendications

1. Procédé permettant de fabriquer un bâtiment en préfabriqué,
selon lequel un coffrage (24) destiné à la préfabrication d'éléments de sol (20, 40, 50, 60, 70, 80, 84) est fourni, une surface (30) d'un fond (28) du coffrage (24), sur laquelle le béton de l'élément de sol (20, 40, 50, 60, 70, 80, 84) est coulé lors de la préfabrication de l'élément de sol (20, 40, 50, 60, 70, 80, 84), étant sensiblement lisse,
une fois le béton durci, l'élément de sol (20, 40, 50, 60, 70, 80, 84) est retiré du coffrage (24),
une sous-structure porteuse (18) d'un sol (12, 14, 16) du bâtiment (10) étant érigée, et
selon lequel l'élément de sol (20, 40, 50, 60, 70, 80, 84) est appliqué sur la sous-structure (18) de telle manière que la face inférieure lisse (32) de l'élément de sol (20, 40, 50, 60, 70, 80, 84), laquelle est en contact avec le fond (28) du coffrage (32) lors de la préfabrication, est opposée à la sous-construction (18), et que la face supérieure (34) de l'élément de sol (20, 40, 50, 60, 70, 80, 84) opposée à la face inférieure lisse (32) lors de la préfabrication repose au moins en partie sur la sous-construction (18),
**caractérisé en ce qu'**on utilise une sous-construction (18) qui comporte une plaque porteuse en béton armé, des éléments de plafond formant poutre en bois et/ou des éléments de plafond formant nervure en acier.

2. Procédé selon la revendication 1, **caractérisé en ce qu'**une armature (52), en particulier un treillis soudé et/ou au moins une barre d'acier, est présente dans l'élément de sol (20, 40, 50, 60, 70, 80, 84) lors de la préfabrication de l'élément de sol (20, 40, 50, 60, 70, 80, 84).

3. Procédé selon l'une quelconque des revendications précédentes, **caractérisé en ce que** lors de la préfabrication, au moins un tuyau (62), en particulier un tuyau (62) en forme de serpentin ou un tuyau (62) hélicoïdal, est présent dans l'élément de sol (20, 40, 50, 60, 70, 80, 84).

4. Procédé selon l'une quelconque des revendications précédentes, **caractérisé en ce qu'**une fois le béton versé dans le coffrage (24) et avant le durcissement du béton, un élément d'amortissement (42, 72), en particulier au moins un mat de fibres minérales, est pressé contre le béton encore humide.

5. Procédé selon l'une quelconque des revendications précédentes, **caractérisé en ce qu'**avant le versement du béton dans le coffrage (24), au moins un élément d'amortissement, en particulier au moins un mat de fibres minérales, est posé sur le fond (24) du coffrage (24).

6. Procédé selon l'une quelconque des revendications précédentes, **caractérisé en ce qu'**un élément de sol (20, 40, 50, 60, 70, 80, 84) présentant une longueur comprise entre 0,5 mm et 8 mm, en particulier entre 3 mm et 7 mm, et/ou une largeur comprise entre 0,5 m et 4 m, en particulier entre 1,5 m et 3 m, est utilisé.

7. Procédé selon l'une quelconque des revendications précédentes, **caractérisé en ce que** la couche de béton (26) de l'élément de sol (20, 40, 50, 60, 70, 80, 84), formée par le béton versé, est produite avec une épaisseur comprise entre 30 mm et 60 mm, en particulier avec une épaisseur de 45 mm.

8. Procédé selon l'une quelconque des revendications précédentes, **caractérisé en ce qu'**une fois l'élément de sol (20, 40, 50, 60, 70, 80, 84) appliqué sur la sous-construction (18), un revêtement de sol (22), en particulier une moquette, un carrelage, un stratifié et/ou un parquet, est appliqué sur la face inférieure lisse (32) de l'élément de sol (20, 40, 50, 60, 70, 80, 84).

9. Procédé selon l'une quelconque des revendications précédentes, **caractérisé en ce que** l'élément de sol (20, 40, 50, 60, 70, 80, 84) est utilisé en lieu et place d'une chape de béton.

10. Procédé selon l'une quelconque des revendications précédentes, **caractérisé en ce que** l'élément de sol (20, 40, 50, 60, 70, 80, 84) présente une résistance préréglée.

11. Procédé selon l'une quelconque des revendications précédentes, **caractérisé en ce que** plusieurs éléments de sol (20, 40, 50, 60, 70, 80, 84), en particulier plusieurs éléments de sol (20, 40, 50, 60, 70, 80, 84) présentant des dimensions différentes, sont préfabriqués et appliqués sur la sous-construction (18).

12. Procédé selon la revendication 11, **caractérisé en ce qu'**une bande pré-comprimée (90) est disposée entre deux éléments de sol (20, 40, 50, 60, 70, 80, 84) voisins.

13. Procédé selon la revendication 11 ou 12, **caractérisé en ce que** l'élément de sol (20, 40, 50, 60, 70, 80, 84) présente sur au moins un bord opposé à la sous-construction (18) un évidement (86, 88), et **en ce que** deux éléments de sol (20, 40, 50, 60, 70, 80, 84) voisins sont reliés l'un à l'autre par le remplissage au moins partiel de la fente (92) formée par l'évidement (86, 88) en agent de liaison, en particulier en adhésif à base de résine époxyde.

14. Procédé selon la revendication 13, **caractérisé en ce que** deux éléments de sol (20, 40, 50, 60, 70, 80, 84) voisins présentent sur le bord opposé à la sous-construction (18) et tourné vers l'un et vers l'autre respectivement un évidement (86, 88), et **en ce que** la fente (92) formée par les évidements (86, 88) présente une section transversale rectangulaire, circulaire, ovale, en forme de V ou en forme d'auge.

15. Procédé selon l'une quelconque des revendications précédentes, **caractérisé en ce qu'**on utilise une sous-construction (18) qui comprend une plaque porteuse en béton soudé et une isolation acoustique contre les bruits de pas.
